**Europäisches Patentamt**

**European Patent Office**

**Office européen des brevets**

(11) Veröffentlichungsnummer: **0 122 387**
**A2**

(12) # EUROPÄISCHE PATENTANMELDUNG

(21) Anmeldenummer: **84101460.8**

(22) Anmeldetag: **13.02.84**

(51) Int. Cl.³: **A 21 D 15/08**
**A 23 P 1/00**

(30) Priorität: **12.03.83 DE 3308894**

(43) Veröffentlichungstag der Anmeldung:
**24.10.84 Patentblatt 84/43**

(84) Benannte Vertragsstaaten:
**AT BE CH DE FR GB IT LI LU NL SE**

(71) Anmelder: **DYNAMIT NOBEL AKTIENGESELLSCHAFT**
**Postfach 1209**
**D-5210 Troisdorf, Bez. Köln(DE)**

(72) Erfinder: **Hülsmann, Hans Leo, Dr.**
**Appendahl 29**
**D-5802 Wetter 4(DE)**

(54) **Eingesiegelte, verpackte Dauerbackwaren, Teigwaren o. dgl., Verfahren zu deren Herstellung und Verwendung von Acetoglycerid-Massen zur Herstellung der Einsiegelung.**

(57) Verpackte, im wesentlichen sterile Backwaren, Teigwaren o. dgl. werden außen auf der Verpackung mit einer Einsiegelung aus einem geschlossenen Überzug aus einer flüssig aufgebrachten Überzugsmasse auf Basis von gemischten Glyceriden der Essigsäure und im wesentlichen gesättigter Fettsäuren mit 12 bis 22 Kohlenstoffatomen versehen. Die Glyceride haben sehr bevorzugt eine Hydroxylzahl von 50 bis 180.

Fig. 1b

EP 0 122 387 A2

0122387

DYNAMIT NOBEL AKTIENGESELLSCHAFT
5210 Troisdorf

Eingesiegelte, verpackte Dauerbackwaren, Teigwaren o.dgl.,
Verfahren zu deren Herstellung und Verwendung von
Acetoglycerid-Massen zur Herstellung der Einsiegelung

Die Erfindung betrifft Dauerkonserven aus verpackten Backwaren, Teigwaren o.ä., welche über der Verpackung eine
dichte Einsiegelung aus Acetoglycerid-Zubereitungen aufweisen.

Die Erfindung betrifft weiter die Verwendung von schmelzbaren Acetoglycerid-Zubereitungen zur Herstellung der Einsiegelung auf vorverpackten Backwaren, Teigwaren o.dgl.

Es ist bekannt, Lebensmittel vor Feuchtigkeitsverlust,
Sauerstoffeinwirkung, Verfärbung, Verunreinigung oder
gegen den Angriff von Mikroorganismen durch lösungsmittelfreie Überzüge auf der Grundlage von Acetoglyceriden zu
schützen (DE-PS 20 30 429). Derartige Überzüge auf Lebensmitteln können aber den Schutz vor Verderbnis oder Beeinträchtigung des Geschmacks nur für eine gewisse Zeit bewirken, zumal der Schutz bei Beschädigung des Überzugs
verlorengeht.

- 2 -

Die Überzugsmittel nach der DE-PS fanden daher nur eine begrenzte Verwendung, beispielsweise zur Verlängerung der Haltbarkeit von gekochter oder angeräucherter Leberwurst, wo sie in üblicher Weise vor dem Verzehr entfernt wurden.

Auf Backwaren o.dgl. konnten die flüssig aufgebrachten Überzugsmittel nach der DE-PS nicht verwendet werden, da die flüssigen Überzugsmittel in die poröse und unregelmäßige Oberfläche der Backwaren eindringen und diese ungenießbar machen.

Dauerkonserven aus Backwaren, Teigwaren o.ä. mußten daher technisch aufwendig durch Verschließen in Blechdosen hergestellt werden, da die übliche Umhüllung von Backwaren, Teigwaren o.ä. durch Verpacken oder Verschließen mit Kunststoffolien oder Metallfolien wie Aluminiumfolie unter Verkleben o.ä. nicht ausreichend und dauerhaft die Befallbarkeit des so eingeschlossenen Guts durch Mikroorganismen verhindert und nur einen unvollständigen Abschluß gegenüber der Luft ermöglicht.

Es bestand daher die Aufgabe, Dauerkonserven mit vollständiger Abschließung gegenüber der Luft in vollständiger Dauersterilisierbarkeit bei geringer Möglichkeit der Beschädigung aus Backwaren, Teigwaren o.ä. auf einfachem Wege herzustellen.

Die genannte Aufgabe wird durch die Erfindung gemäß den Patentansprüchen gelöst.

Gegenstand der Erfindung sind daher verpackte, im wesentlichen sterile Backwaren, Teigwaren o.dgl., dadurch gekennzeichnet, daß außen auf der Verpackung eine Einsiegelung aus einem geschlossenen Überzug aus einer flüssig aufgebrachten Überzugsmasse auf Basis von gemischten Glyceriden der Essigsäure und im wesentlichen gesättigter Fettsäuren mit 12 bis 22 Kohlenstoffatome aufgebracht ist. Diese Glyceride weisen sehr bevorzugt Hydrxylzahlen von 50 bis 180, vorzugsweise von 100 bis 150 auf.

Die Acetoglyceride, d.h. gemischte Glyceride der Essigsäure und der im wesentlichen gesättigten Fettsäuren mit 12 bis 20 Kohlenstoffatome, sind in der Lage, einen geschlossenen Überzug beim Erstarren aus dem flüssigen Zustand zu bilden, der auch in langen Zeiten von mehreren Jahren nicht von Mikroorganismen durchdrungen werden kann und der im wesentlichen keinen Zutritt des Sauerstoffs aus der Luft zu den vollständig eingesiegelten Backwaren, Teigwaren o.dgl. erlaubt.

Voraussetzung ist, daß die Backwaren, Teigwaren o.dgl. im wesentlichen steril verpackt sind, bevor die Überzugsmasse flüssig aufgebracht wird und auf der Verpackung erstarrt. Bei Backwaren wird dies im wesentlichen durch den Backprozeß und die nachfolgende Handhabung in im wesentlichen sterilen Räumen und Apparaturen gewährleistet, kann jedoch auch durch Sterilisieren, durch erneutes Erhitzen und/oder Bestrahlen mit energiereichen Strahlen herbeigeführt werden. Bei Teigwaren o.ä. kann die Sterilität beispielsweise durch Trocknen oder trockenes Erhitzen oder durch Bestrahlen erreicht werden.

Gemäß der Erfindung wird folglich durch die Versiegelung mit der Überzugsmasse eine Erhaltung der gegebenen Sterilität der Backwaren, Teigwaren o.dgl. erreicht, die nach dem Stand der Technik nur mit größerem Aufwand durch Verschließen in Blechdosen erzielbar war.

Die Überzugsmasse auf Basis von gemischten Glyceriden besitzt einen Schmelzpunkt im Bereich von 30 bis 60 °C und ist oberhalb dieses Schmelzpunktes klarflüssig, so daß an der getauchten Verpackung die flüssige Überzugsmasse ablaufen und abtropfen kann. Nach dem Erstarren wird ein geschlossener Überzug gebildet, der durch eine genügende Elastizität vor Beschädigungen weitgehend gesichert ist und welcher nicht fettend ist. Der besondere Vorzug ist dauerhafte Beständigkeit gegen Wasser, Widerstandsfähigkeit gegen Seewasser sowie unveränderte Beständigkeit unter Tropenbedingungen sowie Bedingungen der Raumfahrt und die Erhaltung des Frischezustands der Backwaren.

Die Verpackung der Backwaren oder Teigwaren ist die übliche Umhüllung mit einer durchsichtigen oder nichtdurchsichtigen Folie aus Cellophan, Kunststoffolie oder Metallfolie wie Aluminiumfolie, welche durch Falten und erforderlichenfalls Verkleben hergestellt wird, wobei die Verpackung eine Bedruckung oder Beschriftung aufweisen kann.

Die Form der Verpackung ist an sich eine beliebige und kann die bevorzugte Verpackung mit rechteckigem oder gegebenenfalls dreieckigem oder mehreckigem Grundriß sein, in der geschnittenes Brot, Zwieback, Gebäck oder Kekse üblicherweise vertrieben werden, jedoch kann die Verpackung für lose liegende Waren wie Teigwaren oder körnige Produkte eine unregelmäßige Gestalt einer Tüte, eines Säckchens o.dgl. haben, wobei die Gestalt der Verpackung dann durch die gewählte Form und Beschaffenheit des Verpackungsmaterials gegeben ist. An den Verschluß der Verpackung werden keine hohen Ansprüche gestellt, da die Verpackung selbst keinen dichten Verschluß der Waren zu bilden braucht, der erfindungsgemäß vielmehr durch die Einsiegelung bewirkt wird. Das Verpackungsmaterial soll gegen die heiße Überzugsmasse beständig sein, jedoch kann die Überzugsmasse auch in das Verpackungsmaterial zum Teil eindringen, da diese an sich eßbar ist. Im allgemeinen soll jedoch die Überzugsmasse nicht in die verpackte Ware eindringen. Hohlräume zwischen Ware und Verpackung sollen durch geeignete Wahl der Verpackung im Zusammenwirken mit der Einsiegelung weitgehend vermieden werden.

Die Überzugsmasse besteht aus an sich bekannten sogenannten Acetoglyceriden, welche an das Glycerin gebundene Reste der Essigsäure und höhere Fettsäuren mit 12 bis 20 Kohlenstoffatome enthalten, wobei diese Fettsäuren überwiegend oder gegebenenfalls ganz gesättigte Fettsäuren sind. Bevorzugt sind Glyceride, welche 1 bis 2 Moleküle Essigsäure oder gegebenenfalls Propionsäure je Molekül Glycerin enthalten. Die höheren Fettsäuren sind bevorzugt solcher von 16 bis 18 C-Atomen.

Eine Besonderheit der Acetoglyceride ist die starke Bevorzugung derjenigen mit Hydrxylzahlen von 50 bis 180, insbesondere von 100 bis 150. Die hohe Hydroxylzahl, besonders Hydroxylzahlen ab 100, tragen wesentlich zu der Undurchlässigkeit der Überzüge bei.

Es ist vorteilhaft und bevorzugt, einen Gerüstbildner aus Polymeren den Überzugsmassen zuzusetzen, wobei die Menge der Gerüstbildner 0,2 bis 25, vorzugsweise 0,5 bis 15 Gew.-% betragen kann. Geeignete Gerüstbildner sind beispielsweise Copolymerisate aus Ethylen- und Vinylacetat, insbesondere solche mit 15 bis 47 Gew.-% Vinylacetat oder Celluloseacetat bzw. Cellulosepropionat bzw. Celluloseacetatpropionat. Weiter können die Überzugsmassen 0,1 bis 70, vorzugsweise 0,5 bis 60 Gew.-% einer physiologisch unbedenklichen Paraffins, insbesondere aus geradkettigen Kohlenwasserstoffen, enthalten.

- 6 -

Die durch Einsiegelung zu schützenden eßbaren Erzeugnisse sind insbesondere Schnitt- oder Laibbrot, Toastbrot, Dauerbackwaren wie Zwieback, Kekse, Lebkuchen, Printen oder andere durch einen Backprozeß hergestellte Waren, welche vor allem aus Getreide oder anderen stärkehaltigen Körnerfrüchten, wie Hülsenfrüchten, Nüssen o.dgl. hergestellt sind. In beispielsweise Brot, Brötchen, Keksen oder Kuchen kann durch die Versiegelung der besondere Geschmack der "ofenfrischen" Produkte auf lange Zeit erhalten bleiben.

In entsprechender Weise können auch nicht gebackene, im wesentlichen trockene oder wasserhaltige Teigzubereitungen, besonders Teigwaren wie Nudeln oder Teigpasteten sowie zum Backen vorbereitete Backwaren erfindungsgemäß eingesiegelt werden. Durch die besonders lange Haltbarkeit im eingesiegelten Zustand sind Dauerkonserven und Notrationen möglich.

Weiterer Gegenstand der Erfindung ist daher ein Verfahren zur Herstellung von verpackten Backwaren o.dgl., welches dadurch gekennzeichnet ist, daß die im wesentlichen sterilen verpackten Backwaren, Teigwaren o.dgl. in eine durch Schmelzen verflüssigte Überzugsmasse auf Basis von gemischten Glyceriden der Essigsäure und der Fettsäuren mit 12 bis 22 Kohlenstoffatome getaucht oder gegebenenfalls damit besprüht werden und die Überzugsmasse bei erniedrigter Temperatur zu einer geschlossenen Einsiegelung erstarrt.

Bevorzugt wird das Eintauchen der vorverpackten Ware in die geschmolzene Überzugsmasse. Dabei bildet die Überzugsmasse einen dünnen Überzug von einem oder wenigen Millimetern, wobei Reste der Überzugsmasse in das Tauchgefäß ablaufen. Es ist auch möglich, die verpackten Waren mit der Überzugsmasse zu besprühen. Der Tauchvorgang dauert nur sehr kurze Zeit von 1 bis 2 Sekunden oder weniger. Nach wenigen Sekunden ist die überschüssige Schmelze abgetropft. Nach Erstarrung der Versiegelung kann die Ware in üblicher Weise gestapelt und in Kartons abgepackt werden.

Wesentlich für die Durchführung des Verfahrens ist, daß eine durch den Backprozeß vorhandene ausreichende Sterilität während des Erkaltens und der Verpackung bis zur Einsiegelung erhalten bleibt, was im wesentlichen dadurch gewährleistet ist, daß die Backware von Menschen nicht berührt wird. Wenn erforderlich, kann eine Anlage zum Sterilisieren in an sich bekannter Weise verwendet werden, was bei Brot und wasserhaltigen Teigzubereitungen besonders zweckmäßig ist.

Das Verfahren kann beispielsweise mit einem laufenden Band ausgeführt werden, an dem die verpackten Waren an einem Faden, Band o.dgl. hängen. Dieser Faden oder Band kann gleichzeitig das Reißband eines Aufreißverschlusses sein.

Die Erstarrung der Versiegelung kann durch Kühlung, beispielsweise durch Anblasen mit kalter Luft, beschleunigt werden.

Die erstarrte Versiegelung besitzt eine klebefreie Oberfläche, so daß kein Verkleben der Versiegelungen untereinander oder mit verwendeter Verpackung auftritt.

Weiterer Gegenstand der Erfindung ist die Verwendung von Überzugsmassen auf der Basis von Glyceriden der Essigsäure und der Fettsäuren mit 12 bis 22 Kohlenstoffatome sowie gegebenenfalls einem Gerüstbildner zur Herstellung von geschlossenen Einsiegelungen auf verpackten Backwaren, Teigwaren o.dgl.

In der Zeichnung sind eingesiegelte verpackte Backwaren an Beispielen erläutert.

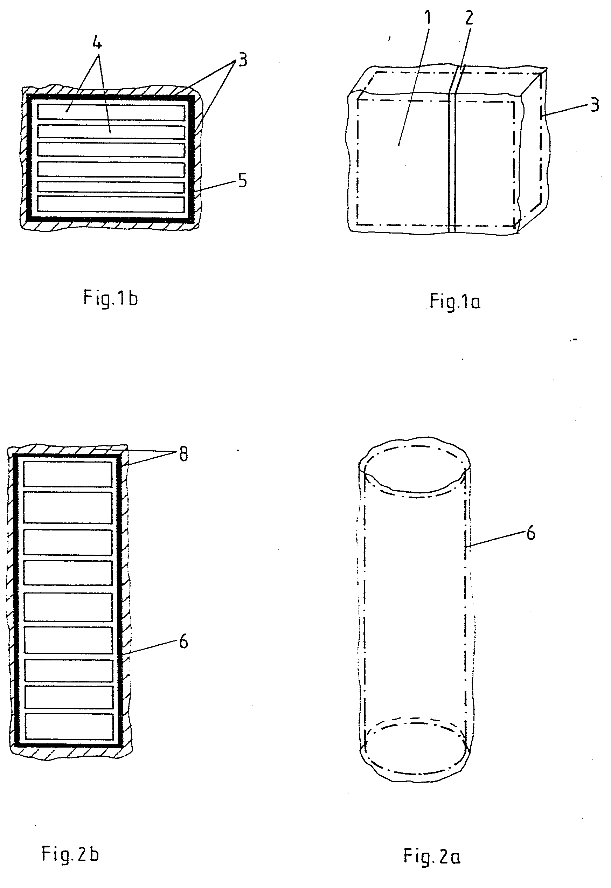

Figur 1 zeigt in Figur 1a eine versiegelte mit einer Metallfolie verpackte Packung von geschnittenem Schwarzbrot. Die im wesentlichen quaderförmige Packung 1 weist einen Aufreißverschluß 2 auf und besitzt durch die Umhüllung mit der Überzugsmasse abgerundete Ecken und Kanten. Durch die Punkt-Strich-Linie 3 ist die innenliegende Verpackung aus Metallfolie angedeutet.

In der Figur 1b ist dieselbe Packung im Querschnitt gezeigt, wobei 4 die Querschnitte der Brotscheiben, die dicke Linie 3 die Verpackung aus Aluminiumfolie und 5 die Einsiegelung aus Überzugsmasse bedeuten. Die Überzugsmasse 5 ist schraffiert dargestellt.

In Figur 2 ist in der Ansicht 2a die Verpackung von Kleinbackwaren wie Keksen o.ä. gezeigt, welche in Art einer "Rolle" von zylindrischer Gestalt mit einem zweischichtigen Material aus einer Cellulosefolie mit aufkaschierter Aluminiumfolie verpackt sind. Durch die Punkt-Strich-Linie 6 ist die innenliegende Verpackung angedeutet.
In Figur 2b ist dieselbe "Rolle" in einem Längsschnitt dargestellt, wobei 7 die aufeinanderliegenden scheibenförmigen Kekse und die dicke Linie 8 die Verpackung darstellt. Die Überzugsmasse 9 ist als schraffierter Bereich wiedergegeben.

Beispiel 1

Ein gebackenes Weißbrot, Roggen-Mischbrot oder Schwarzbrot von rechteckigem Querschnitt wird nach dem Backen und Erkalten in Scheiben geschnitten. Mehrere Scheiben werden in üblicher Weise auf einer Verpackungsmaschine mit einer bedruckten Aluminiumfolie zu einer Packung von rechteckigem Querschnitt verpackt, welche mit einem Aufreißverschluß mit Fadenöse versehen ist. Das Brotpaket wird bei 110$^\circ$C sterilisiert und anschließend an der Fadenöse hängend 1 Sekunde in das Tauchbad einer auf 120 bis 130$^\circ$C erhitzten Überzugs-

masse eingetaucht.

Als Überzugsmassen werden verwendet:

a) Ein Gemisch bestehend aus 95 Gew.-% partiell acetyliertem 90 %igen Monoglycerid auf Basis von gesättigten C 16/C 18-Fettsäuren aus gehärtetem Palmöl, OHZ = 110, und 5 Gew.-% Zellulosepropionat (Half Second Propionate).

b) Ein Gemisch bestehend aus 85 Gew.-% partiell acetyliertem 90 %igen Monoglycerid auf Basis von gesättigten C 16/C 18-Fettsäuren aus gehärtetem Rindertalg; OHZ = 100; 10 Gew.-% ARCOWACHS (geradkettige gesättigte aliphatische Paraffin-Kohlenwasserstoffe) und 5 Gew.-% ELVAX 250 (Ethylen-Vinylacetat-Copolymeren mit 28 Gew.-% Vinylacetat-Gehalt).

c) Ein Gemisch aus 30 Gew.-% partiell acetyliertem 90 %igen Monoglycerid auf Basis von gehärtetem Schweineschmalz, OHZ = 105, 55 Gew.-% ARCOWACHS wie unter b) und 15 Gew.-% ELVAX 250, wie unter b) beschrieben.

Nach einer Tauchzeit von weniger als 1 Sekunde läßt man überschüssige Überzugsmasse in einen Auffangbehälter abtropfen. Sowohl die Masse a) wie auch die Masse b) ergeben eine einwandfrei geschlossene Versiegelung, die das Brotpaket mit einer geschlossenen Schicht von etwa 1 mm Stärke umschließt. Nach Erstarren der Überzugsmasse werden die Brotpakete in üblicher Weise zum Versand abgepackt.

Beispiel 2

Zwei vorgefertigte Tüten aus einer Mehrschichtenfolie, welche aus einer Cellophanschicht mit aufkaschierter Aluminiumschicht besteht und eine Einfüllöffnung aufweist, werden mit

a) Kleinbackwaren in Art von Keksen und

b) kleinen Nudeln von Hörnchenform

gefüllt, worauf die Einfüllöffnung maschinell zugefaltet und mit einem Clip verschlossen wird. Die so hergestellten Verpackungen von unregelmäßiger tütenförmiger Form werden bei etwa 115 $^{o}$C sterilisiert und mit Hilfe einer Haltung im Bereich des Verschlusses 1 Sekunde in das Tauchbad der Überzugsmasse eingetaucht. Mit Hilfe eines zweiten Halters wird die Packung gewendet, so daß die noch flüssige Überzugsmasse über den Verschluß abläuft und die Stelle bedeckt, an der die Packung beim Tauchen gehalten wurde. Eine solche Verpackung kann durch Abschneiden des Verschlusses mit dem Clip geöffnet werden. Nach Erkalten der Verpackung erfolgt in üblicher Weise die versandfertige Abpackung in Kartons.

Troisdorf, den 11. März 1983
OZ 83014   Dr.La/Bd

Patentansprüche

1. Verpackte, im wesentlichen sterile Backwaren, Teigwaren o.dgl., d a d u r c h  g e k e n n z e i c h - n e t , daß außen auf der Verpackung eine Einsiegelung aus einem geschlossenen Überzug aus einer flüssig aufgebrachten Überzugsmasse auf Basis von gemischten Glyceriden der Essigsäure und im wesentlichen gesättigter Fettsäuren mit 12 bis 22 Kohlenstoffatomen aufgebracht ist.

2. Verpackte Backwaren, Teigwaren o.dgl. nach Anspruch 1, dadurch gekennzeichnet, daß die Überzugsmasse einen Gerüstbildner aus Polymeren enthält.

3. Verpackte Backwaren, Teigwaren o.dgl. nach Anspruch 2, dadurch gekennzeichnet, daß die Gerüstbildner aus Ethylen/Vinylacetat-Copolymeren oder Celluloseacetat und/oder Cellulosepropionat bestehen.

4. Verpackte Backwaren, Teigwaren o.dgl. nach einem der vorangehenden Ansprüche, dadurch gekennzeichnet, daß die Glyceride Hydroxylzahlen von 50 bis 180 aufweisen.

5. Verfahren zur Herstellung von verpackten Backwaren, Teigwaren o.dgl. nach einem der vorangehenden Ansprüche, dadurch gekennzeichnet, daß die im wesentlichen sterilen, verpackten Backwaren, Teigwaren o.dgl. in eine durch Schmelzen verflüssigte Überzugsmasse auf Basis von gemischten Glyceriden der Essigsäure und der Fettsäuren mit 12 bis 22 Kohlenstoffatomen getaucht oder ggf. damit besprüht werden und die Überzugsmasse bei erniedrigter Temperatur zu einer geschlossenen Einsiegelung erstarrt.

- 2-

6. Verwendung von Überzugsmassen auf Basis von Glyceriden der Essigsäure und der Fettsäuren mit 12 bis 22 Kohlenstoffatomen sowie ggf. einem Gerüstbildner zur Herstellung von geschlossenen Einsiegelungen auf verpackten Backwaren, Teigwaren o.dgl.

0122387

Fig.1b

Fig.1a

Fig.2b

Fig.2a

Dynamit Nobel Aktiengesellschaf. Troisdorf